Europäisches Patentamt

European Patent Office

Office européen des brevets

(11) Publication number: **0 019 668**
**B1**

## (12) EUROPEAN PATENT SPECIFICATION

(45) Date of publication of patent specification: **21.11.85**

(21) Application number: **79200809.6**

(22) Date of filing: **27.12.79**

(51) Int. Cl.⁴: **H 05 H 1/02**, H 05 H 1/03, H 05 H 1/48, G 21 B 1/00

(54) **Method and apparatus for creating and maintaining a self-supporting plasma ball.**

(30) Priority: **22.12.78 US 972265**

(43) Date of publication of application:
**10.12.80 Bulletin 80/25**

(45) Publication of the grant of the patent:
**21.11.85 Bulletin 85/47**

(84) Designated Contracting States:
**AT BE CH DE FR GB IT NL SE**

(56) References cited:
**WO-A-80/00045**
**DE-A-2 400 274**
**DE-B-1 097 053**
**US-A-3 469 144**
**US-A-3 708 391**
**US-A-4 023 065**

The file contains technical information
submitted after the application was filed and
not included in this specification

(73) Proprietor: **Dijkhuis, Geert C.**
**Kortenaerlaan 7**
**NL-4535 BV Terneuzen (NL)**
(73) Proprietor: **Wevers, Kornelis Willem**
**Parkstraat 35**
**NL-3581 PD Utrecht (NL)**

(72) Inventor: **Dijkhuis, Geert Cornelis**
**NL-4535 BC Terneuzen**
**NL-4535 AA Terneuzen (NL)**

(74) Representative: **Strasse, Joachim, Dipl.-Ing.**
**et al**
**Strasse und Stoffregen European Patent**
**Attorneys Zweibrückenstrasse 17**
**D-8000 München 2 (DE)**

Courier Press, Leamington Spa, England.

### Description

With the reduced availability of conventional sources of energy, controlled fusion has held promise of providing an economical and plentiful source of energy.

The most usual approach is to make use of externally generated magnetic and electric fields to confine a plasma within an evacuated chamber, usually a torus. Such systems were generally large and were foreseen as central power stations and, by their nature, would not be useful as a power source of limited output.

Such proposed systems were intended to radiate neutrons and radiant energy which would be converted into a useable form of energy. Much work has been done on methods for making use of the energy in the neutrons and the electromagnetic radiation and such conversion apparatus forms no part of the present invention.

An approach different from the ones mentioned above is disclosed in US—A—4 023 065 (Koloc) which shows a compound plasma configuration consisting of a single plasma vortex ring or kernel plasma having circulating currents that maintain magnetic fields in a vacuum region surrounding this plasma vortex ring. A mantle of ionized material isolates the kernel and its magnetosphere from surrounding neutral gas layers. The reference discloses method and apparatus to create such a compound plasma configuration from a heliform circulating current driven by a high-voltage power supply. Through reconnection of magnetic field lines this heliform current collapses into a single plasma vortex ring. The initial high-voltage discharge takes place in an evacuated vessel in order to form the required magnetosphere and ionized mantle around the central plasma vortex ring. This compound plasma configuration is formed in gas containing nuclei of light fusionable elements, and then transported to a chamber that can withstand very high pressures. On applying huge external pressures light nuclei in the kernel plasma are heated to fusion energies. The resulting release of fusion energy disrupts the compound plasma configuration immediately so that the cycle of generation, transport and compression must be repeated indefinitely in Koloc's fusion reactor.

According to the present invention as claimed the plasma ball is not formed from a discharge along a heliform current path, but instead from a discharge between closely spaced flat electrodes. The discharge preceding the plasma ball does not behave as an inductive circuit element like a solenoid, but as a capacitive circuit element like a hydromagnetic capacitor instead.

The plasma ball does not store the bulk of its energy in magnetic fields from a ring current, but instead in internal magnetic fields as in a polarized dielectric. The plasma ball is not created in an evacuated vessel with low gas pressure, but instead in a vessel with gas substantially at atmospheric pressure; and the plasma ball not only contains a fuel gas of light fusionable elements, but also a carrier gas of heavier elements that absorb part of the released fusion energy. The plasma ball does not require application of huge external pressures for starting the fusion process, but instead its internal electric fields accelerate light nuclei to fusion substantially at atmospheric pressure. The plasma ball is not disrupted by explosive release of fusion energy, but instead indefinitely maintained in a steady-state by continuous release of fusion energy in modest quantities as long as thermonuclear fuel is supplied to it.

The invention is based on a new model for plasma turbulence. It has been contended that it is possible for a plasma to assume a spherical shape as a result, at least in part, of internal magnetic fields which are generated by the plasma itself. The spherical plasma is a deep electromagnetic well with central temperatures and densities in the range of thermonuclear interest.

The whole configuration behaves as a miniature star held together by electromagnetic forces in a steady state so long as sufficient energy is generated at the center. Two examples of such a plasma sphere are: (1) ball lightning observed in the earth's atmosphere during thunderstorms; and (2) circuit breaker fireballs generated during switching errors in the machine rooms of United States submarines.

The advantages offered by the invention are to provide a continuous thermonuclear reaction in a plasma that is confined without requiring externally-generated magnetic fields. The thermonuclear reaction in a plasma is continuously fueled by thermonuclear fuel mixed with a carrier gas that takes no direct part in the thermonuclear reaction. The reaction chamber has inlet nozzles in opposing positions along a common axis of the chamber and exhaust means for continuous or intermittent removal of fusion products and unused gases.

The method and apparatus for creating and maintaining a self-supporting plasma ball deliver the possibility to work substantially at atmospheric pressure. Fusion reactions can be initiated in a plasma sphere consisting of two counterrotating vortex rings.

More details, features and advantages will be apparent from the following description considered in conjunction with the accompanying drawings, in which:

Figure 1A is a general perspective view of the apparatus with parts of the enclosing wall broken away to show the central plasma sphere, in which the ignition system is aligned with the center line of the reaction chamber;

Figure 1B shows a modification of the apparatus of Figure 1A in which the ignition system lies in the equatorial plane of the reaction chamber;

Figure 2 is a chart showing the run of temperature vs. density inside the plasma sphere where O represents the outer surface, A the photospheric surface, B the sonic interface and C the center of the plasma sphere: on line PQ the pressure due to molecular motion is equal to the pressure due to degenerate electrons;

Figure 3 represents the streamlines in a meridional cross section of the plasma sphere, in which S represents three stagnation points on the polar axis of the flow pattern, and SR indicates the stagnation ring on the equator;

Figure 4 is an enlarged representation of the central part of Figure 3, in which A represents subsonic outflow in a converging duct, B supersonic outflow in a diverging duct, E supersonic inflow in a converging duct, and D subsonic flow in a diverging duct; S represents the central stagnation point of the flow and the dotted line C represents the sonic interface;

Figure 5 is a sketch representing the electromagnetic field inside the plasma sphere, in which the equatorial plane XOY contains the magnetic field lines and the meridional plane XOZ contains the electric field lines;

Figure 6 is a sketch representing the flow pattern inside and around the plasma sphere; the interior flow is a twin pair of counter-rotating vortex rings centered on the polar axis Z, with inflow in the equatorial plan XOY and outflow along the polar axis Z; the external flow comprises two jets symmetrical about the polar axis Z, which attach to the plasma sphere at the poles and separates from it on the equator;

Figure 7 is a schematic longitudinal section through the ignition system of the reactor;

Figure 8 is a sectional view taken along line 8—8 of Figure 7;

Figure 9 is a schematic longitudinal section through a nozzle;

Figure 10A is a schematic longitudinal section through a reaction chamber and auxiliary apparatus of the embodiment shown in Figure 1A;

Figure 10B is a similar longitudinal section through the apparatus shown in Figure 1B.

Figure 11A represents electric field lines between the electrodes of Figures 10A and 10B during ignition;

Figure 11B represents streamlines between the electrodes of Figures 10A and 10B during ignition;

Figure 12A represents streamlines in a meridional section for the reaction vessel of Figure 1B;

Figure 12B represents the meridional electric field lines for the reaction vessel of Figure 1B;

Figure 12C represents the position of the plasma sphere with respect to the nozzles for the reaction chamber of Figure 1B;

Figure 13A represents the equivalent electrical circuit during ignition;

Figure 13B represents the discharge current during ignition;

Figure 13C represents the ignition circuit with a capacitor bank;

Figure 14A represents convective heat flux and vorticity in the plasma;

Figure 14B represents magnetic field, electric current and vector potential inside the plasma sphere; and

Figure 15 is a block diagram and flow chart of the reactor system embodying my invention.

A new type of plasma reactor and process is conceived, which is based on a model for plasma turbulence that explains the physics of self-contained energetic plasma spheres such as ball lightning and circuit breaker fireballs. Among the features that distinguish this model from contemporary theories are (i) convective heat flux prescribes mass flow, and (ii) ferromagnetic ordering in the convective plasma. The precise dependence of the flow pattern on the convective heat flux is derived from the thermodynamics of irreversible processes; the resulting relation implies that a convective plasma sphere must consist of a twin pair of counterrotating vortex rings centered on their common axis of symmetry. This is a configuration which contains kinetic energy, but does not contain angular momentum when averaged over the whole sphere. The vortex motion has a singular point at the center of the sphere, where radial streamlines in the equatorial plane join and form two streamlines which go radially outward along the symmetry axis of the flow, until they meet the surface of the plasma sphere. At the north and south poles of the vortex motion, the radial streamline branches out into meridians lying on the surface of the plasma sphere. On the equator, the surface streamlines from opposite poles join and form ingoing streamlines returning to the center of the sphere. In this way, the twin vortex ring configuration establishes a direct communication between the center and the surface which will be brought to advantage in the following reactor design.

Between the vortex flow at the surface of the plasma sphere and the atmospheric air a boundary layer must develop, across which the temperature decreases to its atmospheric value, and the density increases to its atmospheric value. Near the poles and near the equator, this boundary layer is isobaric as no external forces act on its material. The isobaric condition may be violated between poles and equator because of the curvature effects.

As was stated earlier, the model for plasma turbulence postulates ferromagnetic ordering in the convective region of the plasma sphere. This brings about a magnetic permeability in the convective region which may be very much larger than unity. This ferromagnetic ordering causes a negative binding energy which is necessary to obtain a stable configuration. It provides an inward force which compensates the force due to the outward pressure gradient, and the inertial forces due to the curved vortex motion of the gas in the convective envelope. The magnetic field is purely azimuthal; magnetic field lines are circles centered on the symmetry axis of the vortex flow. The magnetic field lines coincide with the vortex lines of the flow pattern. The vortex lines have opposite directions in the northern and southern hemispheres.

The plasma sphere is formed by first short-circuiting an electrical power supply and then suddenly interrupting the current. From circuit breaker experiments on ships it has been found that the current must be over 150,000 amperes to form a fireball in atmospheric air, the voltage between the electrodes being a few hundred volts. At the present time, battery banks, as present on submarines, appear to be the best power supply to generate sufficiently energetic fireballs. The conditions in the discharge and in the plasma sphere which develops from it can be controlled by means of the amount of charge in the battery bank and by varying the moment at which the short-circuit current is interrupted.

To get a thermonuclear reaction going at the center of the plasma sphere, the atmospheric air must be mixed with some thermonuclear fuel, of which the isotopes of hydrogen, deuterium and tritium, have the lowest ignition temperature. As these isotopes form an explosive mixture with oxygen, this element must not be present in the plasma sphere. Rather, the plasma sphere must be predominately of a gas that does not react chemically with hydrogen or its isotopes. Nitrogen, or even more inert gases, may be used. This carrier gas is premixed with the selected thermonuclear fuel before the plasma sphere is generated. As the discharge is struck in this mixture, and thermonuclear conditions develop inside of the plasma sphere, the fusion reaction at the center must produce just the needed amount of power to sustain the radiative output at the surface. The state of the plasma sphere will then remain the same for so long as the thermonuclear fuel is supplied to it. This is comparable to the main sequence state of stars in which fusion of hydrogen into helium halts the gravitational contractions until all hydrogen is burned. For steady-state operation, it is also necessary to remove the reaction products continuously or intermittently. The carrier gas does not participate in the reactions, but serves to make the energy transfer from the center to the surface convective. The plasma sphere could not exist if radiation or conduction were the dominant mode of heat transfer between the center and the surface.

Once the plasma sphere has been formed, it is transported into the reaction chamber by the drag force of the gas flowing around it, and settles at an equilibrium position determined by the net effect of the drag forces from two gas jets coming from opposite directions and of the electrostatic field inside the reaction chamber. The equilibrium position can be adjusted by changing the strength of either jet, or by changing the potentials that cause the external field. The reaction will continue so long as the fuel concentration is kept at the proper level. As the fuel consumption in thermonuclear reactions is very slow, diffusion will keep the fuel concentrations inside and around the plasma sphere at substantially the same level. One way to stop the reaction is to filter the fuel out of the carrier gas circulation, and to wait until the fuel concentration inside the sphere falls below the critical level. The plasma sphere will then radiate away its internal energy and recombine to neutral gas.

Two equations describe the state of turbulence in a magnetized plasma. One relates the convective heat flux in the plasma to the vorticity of the flow pattern in the plasma. This holds only if no heat sources exist inside the layer. In this case, the heat flux has a vanishing divergence which means it has a vector potential as indicated by the Helmholtz Theorem. This vector potential of the convective heat flus $(\vec{q})$ is identified as the vorticity of the fluid flow inside the turbulent plasma:

$$\text{curl}(\text{curl}\,\vec{v}) = c\vec{q}  \qquad (1)$$

A detailed derivation of this equation is given in my doctoral dissertation "Thermally Driven Mass Flows in the Convection Zone of the Sun", which is available as report NASA-CR 136505, or as Microfilm No. N74—1542 from University Microfilms. The basic idea underlying Equation (1) is the "expanding sphere" model for turbulent fluids. This turbulence model introduces a rotational degree of freedom into the dynamic equations for a turbulent fluid. The model distinguishes between orbital and intrinsic angular momentum of fluid elements, which are coupled by the anti-symmetric component of the stress tensor. In ascribing anti-symmetric stresses to the turbulent fluid, the "expanding sphere" model goes beyond the realm of the Navier-Stokes equations, which describe fluids with a symmetric stress tensor. In addition to anti-symmetric stresses, the rotational degree of freedom inherent in the "expanding sphere" turbulence model introduces couple stresses into the dynamical equations, which represent the flux of intrinsic angular momentum in a given direction in the same way as each component of the stress tensor represents the flux of linear momentum. The most important effect of the "expanding sphere" turbulence model reveals itself in the transport equation for heat, as derived from second law of thermodynamics: one finds that in addition to heat transfer by translations of fluid elements there can be heat transfer by rotations of fluid element also. Moreover, the flux of heat is thereby coupled to the flux of the intrinsic angular momentum in the turbulent fluid. With regard to the transformation properties under proper as well as improper transformations one finds that the rotational contribution to the heat flux is as given in Equation (1).

An atmospheric plasma ball represents a spherically symmetric situation in which the outward heat flux $\vec{q}$ depends only on the distance from the center of the sphere, hence:

$$\vec{q} = \left( \frac{L}{4\pi r^2}, 0, 0 \right)  \qquad (2)$$

where L denotes the luminosity (Watt) of the plasma ball. In the form of Equation (2), the heat flux has a vanishing divergence, in accordance with the concept of Equation (1). The solution for the vorticity curl $\vec{v}$ inside an atmospheric ball is obtained by integrating Equation (1) using Stokes' theorem; one finds a purely azimuthal vorticity of the form:

$$(\text{curl } \vec{v})_\phi = \frac{cL(\pm 1 - \cos\theta)}{4\pi r \sin\theta} \qquad (3)$$

where the positive sign refers to the northern hemisphere and the negative sign refers to the southern hemisphere. An alternative formula for the vorticity on the northern hemisphere of the plasma ball is

$$\frac{cL}{4\pi r} \tan \frac{\theta}{2}$$

and for the southern hemisphere

$$-\frac{cL}{4\pi r} \cot \frac{\theta}{2} \, .$$

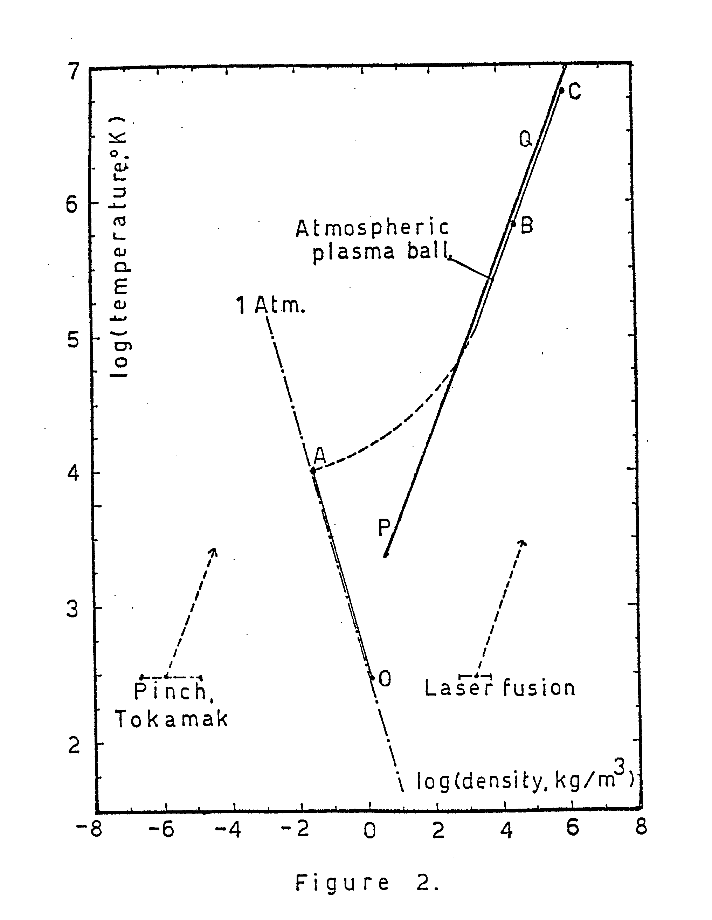

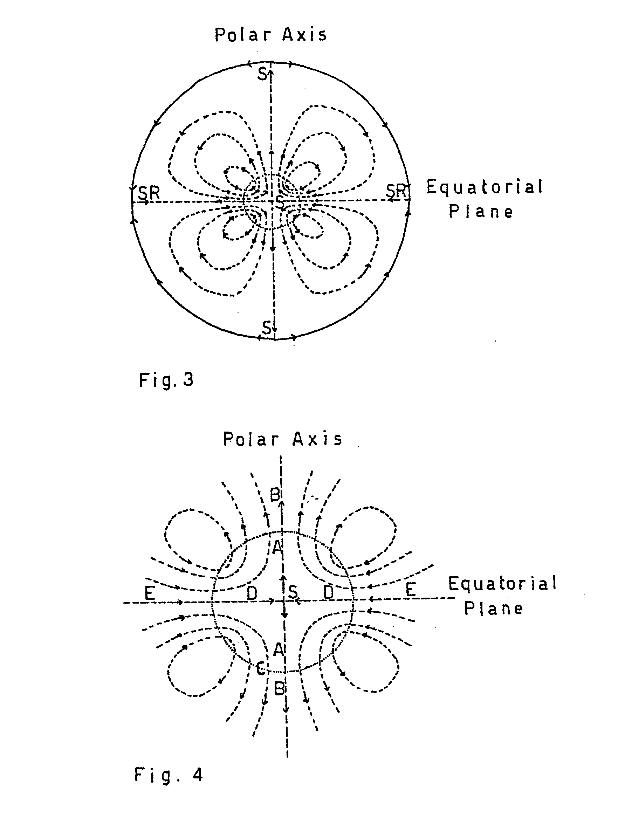

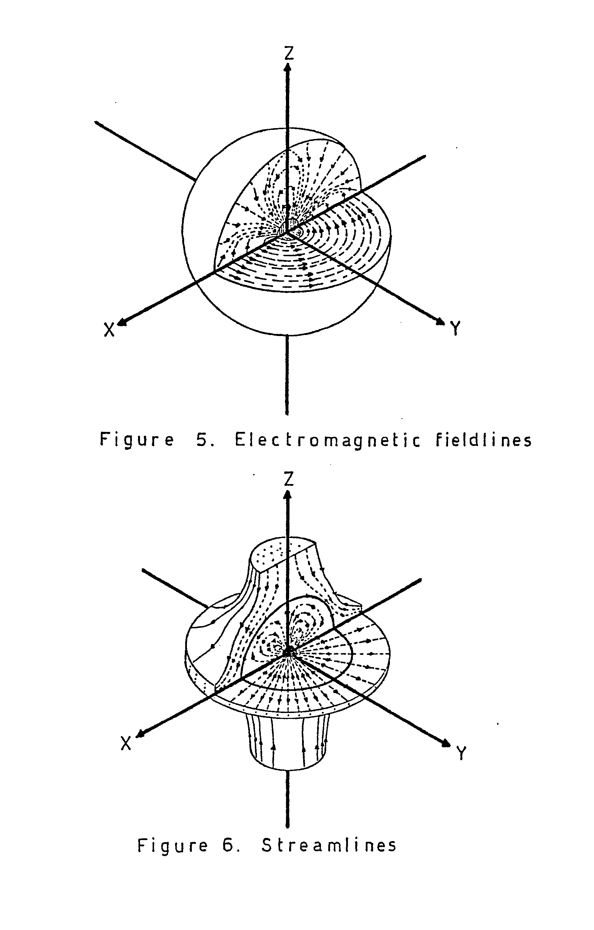

These expressions show that the plasma ball consists of two counterrotating, but otherwise identical vortex rings, each of which occupies one hemisphere of the ball. As both c and L must be taken as positive quantities, the sense of the fluid circulation is such that the fluid moves outwardly along the axis of the rings (the Z-axis in Figures 3 to 6) and inwardly along the equatorial plane that separates the rings (the XOY-plane in Figures 5 and 6). The meridional plane XOZ in Figure 6 shows qualitative streamlines of the vortex ring occupying the northern hemisphere of the plasma ball. The equatorial plane XOY of Figure 6 contains radially inward streamlines of both vortex rings. These streamlines meet at the center of the sphere, and issue from the center along the polar axis Z, in opposite directions. On reaching the surface of the sphere, the streamlines along the polar axis branch out along meridians lying on the surface, and these branches return to the equatorial plane, where meridional streamlines issuing from opposite poles meet and turn inward to the center of the sphere. The overall circulation in a meridional plane is shown in Figure 3. The north and south poles of the plasma sphere and stagnation points, the equator is a stagnation ring. The center line of each vortex ring has the form of a circle, the location of which is determined by the density-stratification inside the plasma sphere. If the center line of each vortex ring is close to the center of the sphere and far from the surface, then the density must be high in the central region and low in the regions near the surface. The exact form of the streamlines of the vortex flow cannot be found directly from Equation (3). The velocity $\vec{v}$ also has to satisfy the continuity equation div$\rho\vec{v}=0$, which introduces the density $\rho$ into the equations. The amount of central concentration of the mass distribution cannot be determined without establishing an equation of state for the plasma which forms the sphere. The equation of state relates pressure, density and temperature, and is best examined in the logarithmic T,$\rho$-plane depicted in Figure 2. The plasma sphere can be divided into three regions. Going inward from the surface O with atmospheric values for pressure, density and temperature there is first a thin boundary layer characterized by a constant pressure of one atmosphere. As the material of the boundary layer is still largely un-ionized, the ideal gas law holds good. Under isobaric conditions, the ideal gas law implies that temperature and density are inversely proportional: as the boundary layer gas heats up to surface temperature of the plasma ball, its density falls off. This behavior is represented as the isobaric line OA in Figure 2. At the same time the velocity grows from rest at the exterior surface of the boundary layer to values at the interface with the plasma sphere. The visible surface of the plasma sphere is the location where the photons decouple from matter. Outside the visible surface, the material is transparent, but inside the material is opaque, and radiation and molecular motion have the same temperature. Moving inward from the visible surface, the temperature of the plasma increases monotonically, and with it the degree of ionization of the molecules increases. The equation of state is now given by Saha's equation. For a complicated mixture of molecules like atmospheric air, Saha's equation predicts only a slow increase of temperature, but a much more rapid increase of density as one moves inward into the plasma ball starting from the visible surface. The broken part of curve AB in Figure 2 approximately represents the run of temperature and density in the region where pressure mainly comes from motion of partially ionized molecules, in accordance with Saha's equation. As the density increases further, curve AB enters the region where electron degeneracy becomes important, as in solids. The line PQ in Figure 2 separates the regions of the T,$\rho$-plane where kinetic pressure dominates from the region where the pressure of degenerate electrons dominates. So long as the degenerate electrons are non-relativistic, the equation state is $p=K\rho^{5/3}$, where K is a constant. This implies that in the region of the plasma sphere where pressure comes primarily from degenerate electrons, the temperature must be proportional to $\rho^{2/3}$. The same relation $T\propto\rho^{2/3}$ holds for the line PQ in Figure 2, at which the contributions to the pressure from the molecular motions and from degenerate electrons are equal. Therefore, as the density in the plasma ball increases, the curve AB will enter the region with degenerate electron pressure, and will continue parallel to PQ as the line BC, where C stands for the center of the plasma sphere. The position of the dividing line PQ in the T,$\rho$-plane is only slightly sensitive to the chemical composition of the plasma which forms the sphere. The central values of temperature and density of any plasma sphere according to the concept of Equation (1) must always lie closely to PQ in Figure 2, even if the gases which make up the plasma are different from air. This is important since oxygen must be removed from air before it can be mixed safely with thermonuclear fuels such as deuterium and tritium. To summarize the three regions of an atmospheric plasma ball with different equations of state, we have:

| | | | |
|---|---|---|---|
| Boundary layer: | ideal gas law (isobaric): | $\rho T = const.$ | (5A) |
| Envelope: | Saha's equation: | $T = k\rho^{0-2/3}$ | (5B) |
| Central region: | electron degeneracy: (non-relativistic) | $T = K\rho^{2/3}$ | (5C) |

The position of point O in Figure 2 is determined by the average temperature and density in the atmosphere. If the plasma ball is generated in a controlled environment, then the position of O can be changed. However, changes in temperature and density have no effect on the position of the line PQ, which is the locus of the central temperature and density of any plasma sphere according to the concept of Equation (1). Since only the central temperature and density of the plasma sphere determine its usefulness as a vehicle for controlled fusion there is no need to supply the reaction chamber with equipment for pressurization or evacuation, as this only affects the position of O and not the essential position of the center C in Figure 2. The position of the visible surface A in the T,$\rho$-plane is also dependent on conditions in the surrounding gas. For atmospheric fireballs, colors ranging from red to blue have been reported, and this may be related in an as yet unknown way to the central values of temperature and density. For main sequence stars, the trend is that blue stars have higher central parameters than stars with a red surface. Therefore, point A is situated in Figure 2 at $10^4$ °Kelvin. The surface temperature of a plasma sphere must be expected to be sensitive to the chemical composition of the plasma, and this will be a carefully controlled parameter in the thermonuclear reactor design described later.

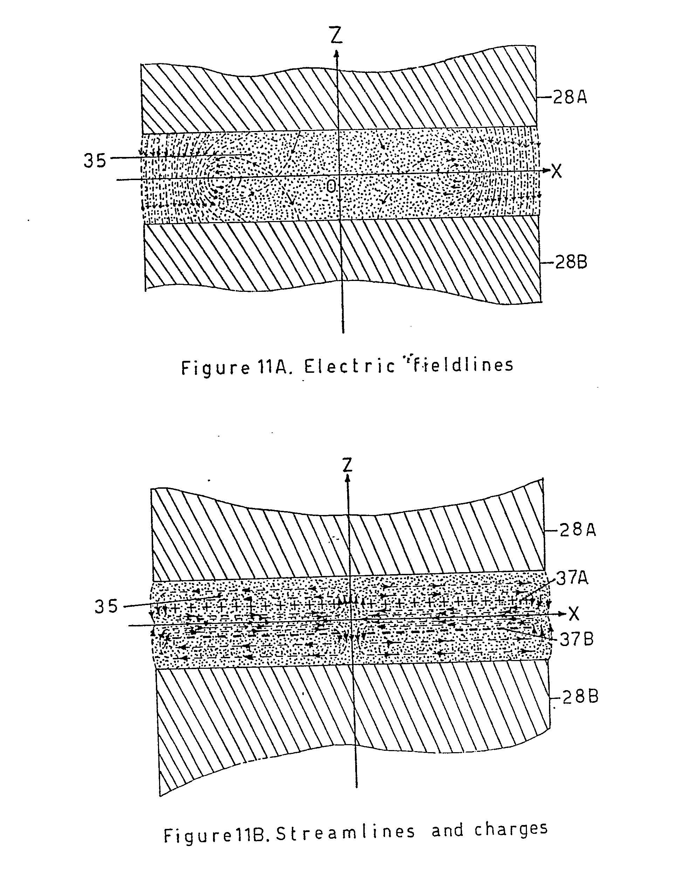

In the present model, stability of the plasma sphere arises from magnetic interaction of individual plasma eddies. Magnetic attraction of plasma eddies can produce stable plasma spheres just as gravitational attraction can produce stars. Like an ordinary magnet, and like other magnetic materials below the Curie temperature, such a plasma has a permanent magnetic field even in the absence of current or external magnetic fields. To explain how this magnetic interaction produces vortex motion in an atmospheric plasma ball, consider an electrical discharge between two electrodes immediately after breaking a very large short-circuit current, as in Figures 11A and 11B. Initially, the current traverses the turbulent plasma slab 35 in the axial direction Z, driven by the power supply and self-inductance of the electrical circuit. Magnetic field lines produced by the discharge current circle the Z-axis in azimuthal direction. As ferromagnetic ordering of plasma eddies in azimuthal direction begins to increase the magnetic flux through meridional halfplanes (e.g. plane XOZ) of the plasma slab, Faraday's law of induction generates closed electric field lines in each meridional plane of the slab 35. Figure 11A shows a qualitative picture of closed and open field lines in the discharge between the copper bar 28A acting as anode, and the identical copper bar 28B acting as kathode. Electrical forces along open field lines only result in stresses on the immovable copper electrodes 28A and 28B, but electrical forces along closed field lines produce a meridional circulation in the plasma slab. With the direction of the closed field lines fixed by Faraday's law of induction, the sense of this meridional circulation depends on the sign of the space charge of the plasma. Near the anode, outward electric field lines will accelerate the positive plasma outward along the flat surface of electrode 28A. Near the kathode, inward electric field lines also accelerate the negative plasma outward along the flat surface of electrode 28B. In the neutral midplane region between kathode and anode, there is no electric force to offset the inward magnetic force on all plasma elements, and the plasma is accelerated towards the axis Z as in linear pinch experiments. Figure 11B sketches streamlines of the resulting meridional circulation pattern in the plasma slab. The flow consists of two counter-rotating, but otherwise identical vortex rings, as demanded by Equation (3) for atmospheric plasma balls. The sense of the meridional circulation sketched in Figure 11B is consistent with Lenz's law: the electrical current produced by the circulation of both the positive anode region and the negative kathode region of the plasma slab results in an azimuthal magnetic field which opposes the increase of magnetic flux caused by ferromagnetic ordering of plasma eddies. In the steady state, plasma motion across magnetic field lines drives charge carriers of opposite sign towards the surface which separates inward and outward flow in each of the two vortex rings. In Figure 11B the electric charge distribution is represented as an electric dipole layer in the midplane of the plasma slab 35. As long as plasma flows radially inward across azimuthal magnetic field lines in the XOY-plane, positive charge resides on the nodal surface 37A of the upper vortex ring, and negative charge resides on the nodal surface 37B of the lower vortex ring sketched in Figure 11B; Coulomb attraction of these two surface charges represents electrical energy as in a polarized dielectric. Such coupling between vortex motion and electric field energy turns the plasma slab into a hydromagnetic capacitor, as explained by Anderson et al. in Journal of Applied Physics, Volume 30, Number 2 (februari 1959) pag. 188—196. Such devices are known to store electrical energy with great efficiency. Relative dielectric constants obtained with rotating conductors in strong external magnetic fields range from $10^6$ for low-density plasma circulation, up to $10^{15}$ for metals spinning at the break-up velocity. With the vacuum capacity of the electrode system 28A and 28B increased by this enormous amount, the discharge can store the observed range of ball lightning energies at moderate voltages. I conclude that a sufficiently strong electrical discharge between the flat electrodes 28A and 28B behaves as a dielectric slab with dielectric constant between $10^6$ and $10^{15}$ times higher than in the vacuum. During the discharge, magnetic field energy residing in the circuit self-inductance L is transferred to the discharge capacity C and stored as electrical energy. As long as the discharge stays between the electrodes 28A and 28B, the discharge current will oscillate with period $T=2\pi\sqrt{LC}$, provided the circuit resistance R satisfies $R\ll 2\sqrt{L/C}$. When the electrical circuit is first broken, the discharge current is maximal and all energy resides in the magnetic field of the circuit self-inductance L. The first current zero is reached after a time T/4. At zero current, all magnetic field energy of the circuit has been transferred to the discharge, where it is stored as electric field energy as in a polarized dielectric. The moment of zero discharge current is the proper time to remove the discharge from the region between the electrodes 28A and 28B. On leaving the electrode region, the slab can assume a spherical shape. This marks the birth of an independent plasma sphere 2, such as forms the heart of the present fusion reactor design. If the discharge were fed by an electrical circuit dominated by resistance or capacitance, the discharge current would not oscillate. Without zero's in the discharge current, it is difficult to see how the discharge could leave the electrode region between 28A and 28B, and take a significant fraction of the circuit energy with it. The ignition circuit must contain an inductor which can store the full energy to be imparted to the discharge and the plasma sphere resulting from it.

Calculation of the electromagnetic field inside the independent plasma sphere must be based on Maxwell's equations, augmented by a constitutive equation of electrodynamics specifying the proposed magnetic interaction of turbulent plasma elements. This constitutive relation cannot be the usual linear dependance of the current density $\vec{J}$ on the electric field $\vec{E}$. Ohmic currents would produce Joule heat, and a heat flux vector with non-zero divergence violates the basic relation between heat flux and mass flow in the convective envelope, Equation (1). Instead of Ohm's law, a linear relation $\vec{J}\propto\vec{A}$ between the current density $\vec{J}$ and the vector potential $\vec{A}$ is taken as constitutive equation for the convective envelope of the plasma sphere:

$$\vec{J}=-\vec{A}/\mu_0\lambda^2 \qquad (6)$$

where $\mu_0$ is the magnetic permeability of the vacuum, and $\lambda$ is a constant with the dimension of a length. Equation (6) was first proposed by London to describe magnetic phenomena in superconductors. Equation (6) guarantees absence of Ohmic dissipation and conservation of magnetic flux in the convective envelope of the plasma sphere. The state of ordered vortex motion across magnetic field lines in the turbulent plasma actually bears a close resemblance to the so-called vortex state characteristic of type II superconductors.

The steady-state magnetic field equation is obtained directly by taking the curl on both sides of Equation (6). With $\vec{B}=\text{curl}\vec{A}$ and $\mu_0\vec{J}=\text{curl}\vec{B}$, the magnetic field $\vec{B}$ turns out to obey:

$$\text{curlcurl}\vec{B}+\vec{B}/\lambda^2=0 \qquad (7)$$

where the length scale $\lambda$ has been taken uniform. Magnetic field solutions of Equation (7) cannot be uniform. In the planar case, admissible solutions of Equation (7) are exponentially damped. Inside the plasma sphere, the magnetic field only has an azimuthal component. In spherical polar coordinates $(r, \theta, \phi)$, the magnetic field inside the plasma sphere depends on radius r and polar angle $\theta$, but not on the azimuthal angle $\phi$, because of symmetry about the polar axis Z of the coordinate frame. With the center of the plasma sphere located at $r=0$, the general solution of Equation (7) inside the convective envelope is:

$$\vec{B}=(0, 0, B_\phi(r, \theta)) \qquad (8a)$$

$$B_\phi= \sum_{n=1}^{\infty} B_n\{\pi\lambda/2r\}^{1/2}I_{n+1/2}(r/\lambda)P_n^1(\cos\theta) \qquad (8b)$$

where $P_n^1(\cos\theta)$ and

$$\{\pi\lambda/2r\}^{1/2}I_{n+1/2}(r/\lambda),$$

$n=1, 2, 3, \ldots\ldots$ are associated Légendre functions of the first kind, and modified spherical Bessel functions of the first kind respectively. Graphs of the first few Bessel functions in Equation (8b) are given in: Handbook of Mathematical Functions, edited by M. Abramowitz and I. A. Stegun (Dover Publications Inc. New York), on page 444. The Bessel functions in Equation (8b) all increase monotonously from zero at the center $r=0$, and thereby produce an inward magnetic pressure. All Légendre functions in Equation (8b) vanish for polar angles $\theta=0$ and $\theta=\pi$, and this ensures that there is no magnetic field anywhere on the polar axis Z. The lowest-order mode n=1 of Equation (8b) can be expressed in elementary function as:

$$B_\phi = B_1\left\{-\frac{\sinh(r/\lambda)}{(r/\lambda)^2} + \frac{\cosh(r/\lambda)}{(r/\lambda)}\right\}\sin\theta \qquad (9)$$

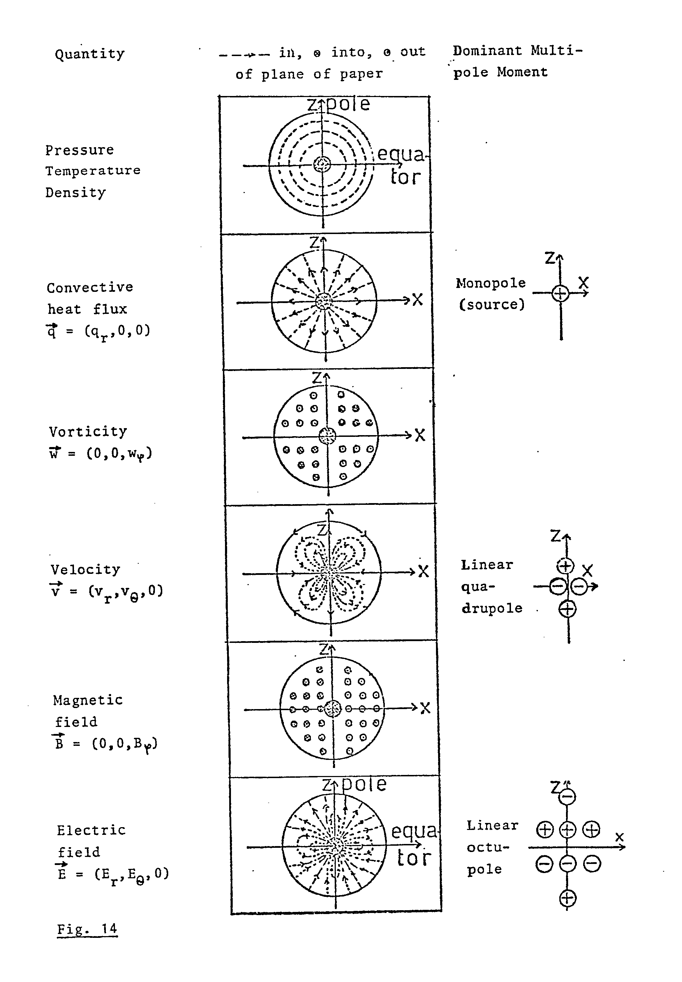

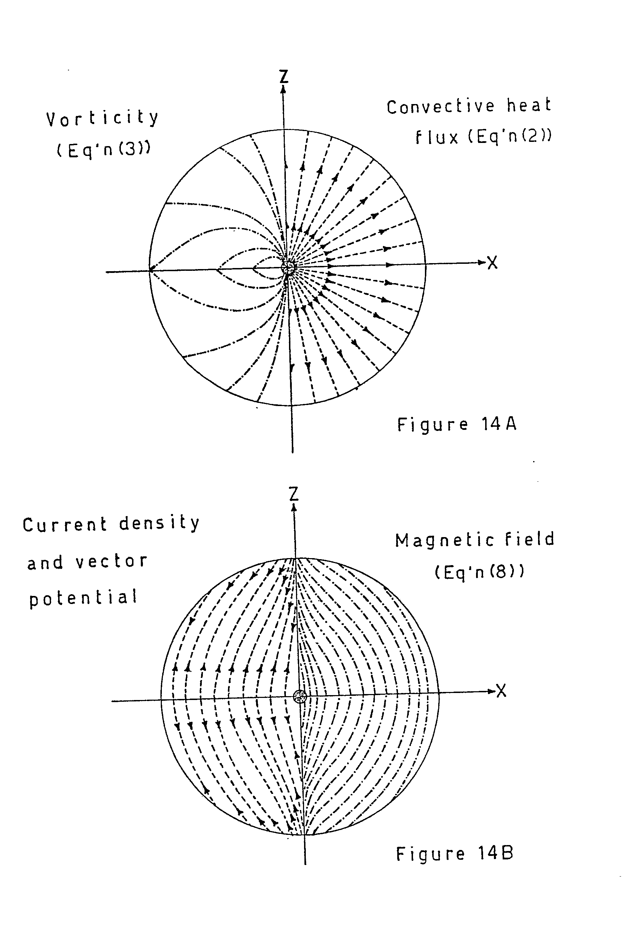

which can be easily verified by substitution in Equation (7). The magnetic field configuration of Equation (9) is shown in Figure 14B, as calculated with a programmable pocket calculator. On dashed lines in the right-hand side of Figure 14B, the magnetic field has constant strength. Between adjacent lines, the strength of the magnetic field differs by a factor of two. For the sake of calculation, the length scale $\lambda$ in Equation (9) has been taken equal to the inner radius of the convective envelope; the outer radius is ten times larger. Under these conditions, Equation (9) gives a surface value for the magnetic field which is about a thousand times larger than the field at the inner radius of the convective envelope. The local strength of the magnetic field and the magnetic energy content of the plasma sphere is further determined by the coefficients $B_n$ in Equation (8b). The direction of the magnetic force on the plasma is perpendicular to the field lines of the current density. Since the magnetic field is azimuthal, the current flows in meridional planes of the plasma sphere. Under axisymmetric conditions, field lines for $\vec{J}$ follow from its vector potential $\vec{B}$ through $B_\phi r\sin\theta=$constant. By the London equation, Equation (6), field lines of $\vec{A}$ (the vector potential of $\vec{B}$) are field lines of the current with reversed direction. Field lines of $\vec{J}$ and $\vec{A}$, as derived from Equation (9), are plotted in the left-hand side of Figure 14B. The magnetic force $\vec{J}\times\vec{B}$ is perpendicular to these field lines, and lies in meridional planes. In the equatorial plane, the magnetic force direction is radially inward, but towards the poles the deviation in axial direction becomes progressively stronger. By means of higher-order terms in the normal mode expansion Equation (8b), the field lines of the current can be made more nearly circular, and the magnetic force more nearly centripetal. However, for all combination of normal modes in Equation (8b), the magnetic field vanishes on the polar axis. This indicates that the force balance of the plasma sphere must be completed with electrical forces arising from plasma motion across magnetic field lines.

Under conditions of infinite conductivity, as under lie the London equation, Equation (6), there is no electrical field in the rest frame of the plasma. On transforming to a laboratory frame in which the plasma moves with velocity $\vec{v}$ across a magnetic field $\vec{B}$, the infinite conductivity condition turns into:

$$\vec{E} + \underline{v}\times\vec{B} = 0 \qquad (10)$$

whereby the electric field vector lies in meridional planes, and is perpendicular to streamlines of the vortex motion. In the present model, streamlines do not coincide with field lines of the current density. Thus the electric force need not be alligned with the magnetic force on the plasma. In connection with Equation (4) for the stream function it was remarked that streamlines of the vortex motion cannot be found analytically for compressible flow, but only by means of numerical integration on a computer. By Equation (10), the same remark applies to the calculation of the electric field. Still, some qualitative remarks can be made regarding the electric field configuration and its associated charge distribution. The electric field lines have at least one end on the inner surface of the convective envelope. Since counterrotating vortex rings occupy opposite sides of the equatorial plane, surface charges of opposite polarity accumulate on the inner surface. Like the plates of a charged capacitor, these two hemispherical surface charge distributions attract each other, and thereby compress the central region of the plasma sphere along the polar axis Z. This electric compression towards the equatorial plane complements the magnetic compression towards the polar axis discussed earlier. Given enough energy, these two forces will create static thermonuclear conditions in a small region around the center of the plasma sphere through radial adiabatic compression. Such electric field lines as do not cross the equatorial plane either tend towards the surface of the convective envelope, or bend towards the polar axis Z. Thereby, the outer surface acquires a surface charge distribution, and the polar axis acquires a line charge distribution which is opposite to the charge residing on the inner surface of the convective envelope. The upper and lower hemisphere of the plasma ball each have an electric dipole moment aligned with the polar axis Z. In addition, each hemisphere has a net charge of opposite sign, because of the electric field lines which cross the equatorial plane. The total charge of the plasma sphere is zero. The dominant multipole moment of such a charge distribution is the linear octupole. In dielectric materials, the polarization vector need not be alligned with the electric field vector. This results in antisymmetric components in the stress tensor of the turbulent flow, which are the deeper reason for the insufficiency of the Navier-Stokes equations, and the use of Equation (1) to describe the convective envelope of the plasma sphere. In the central region of the plasma, outward pressure comes in part from degenerate electrons, and outward energy transfer from radiation or conduction by electrons.

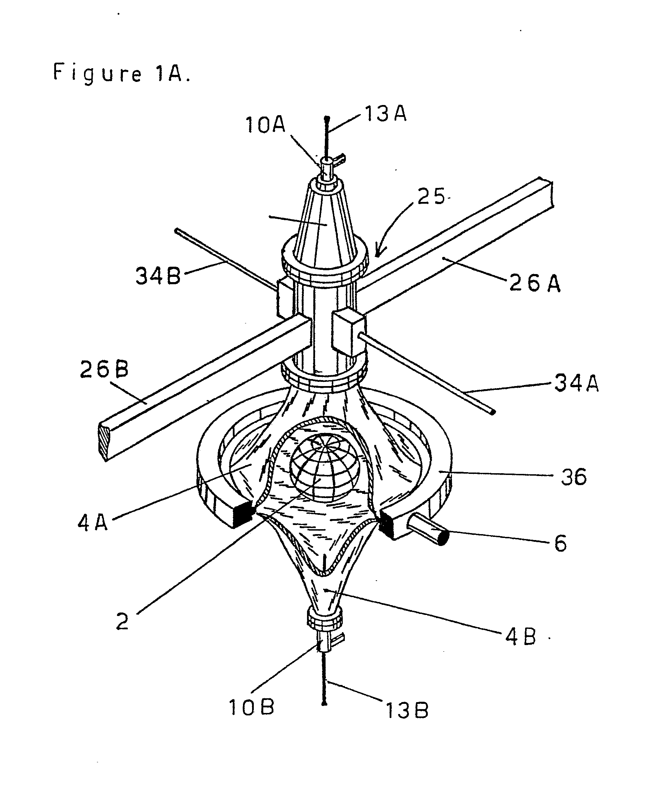

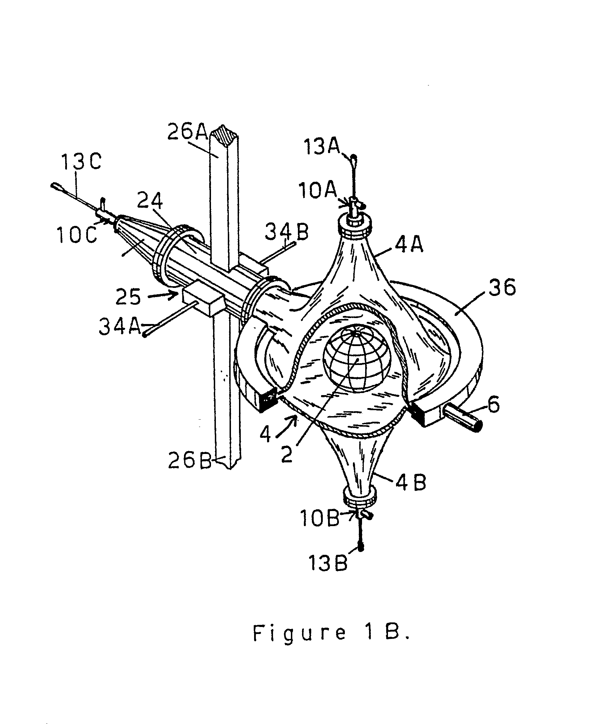

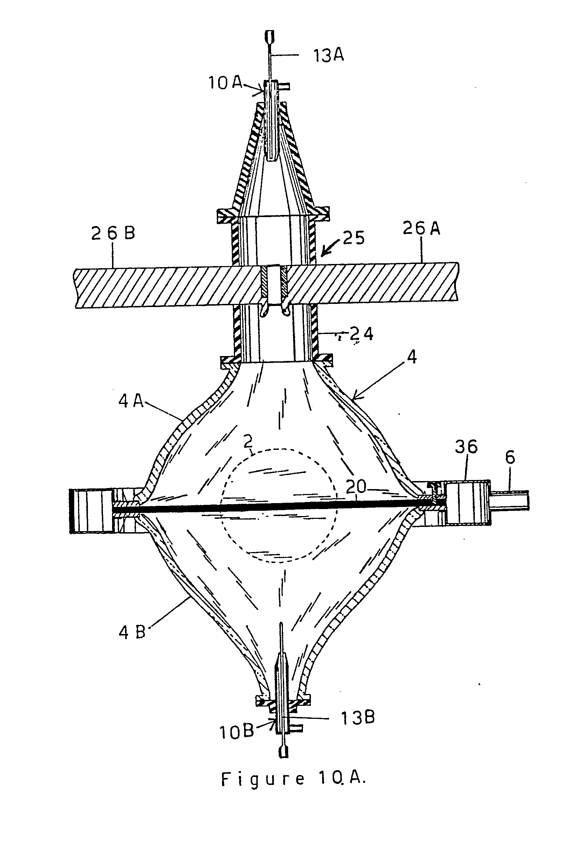

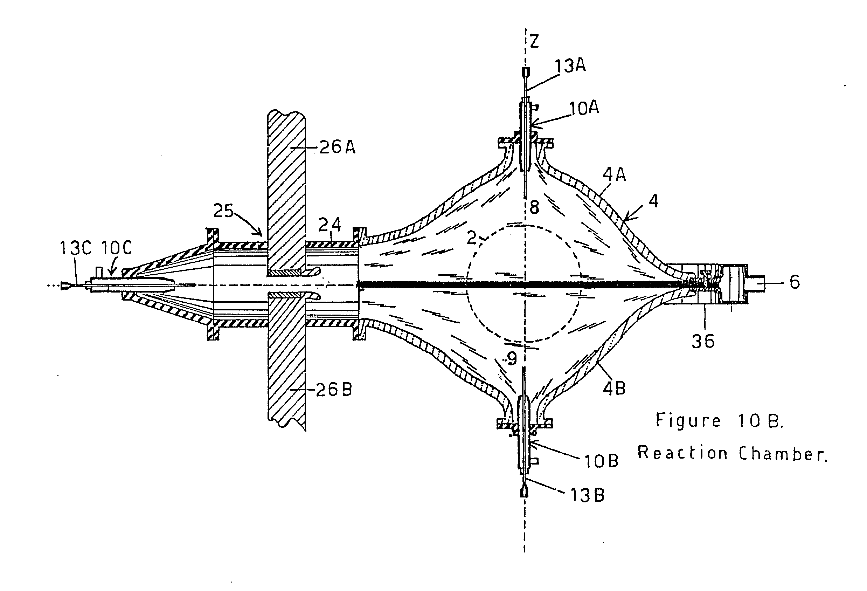

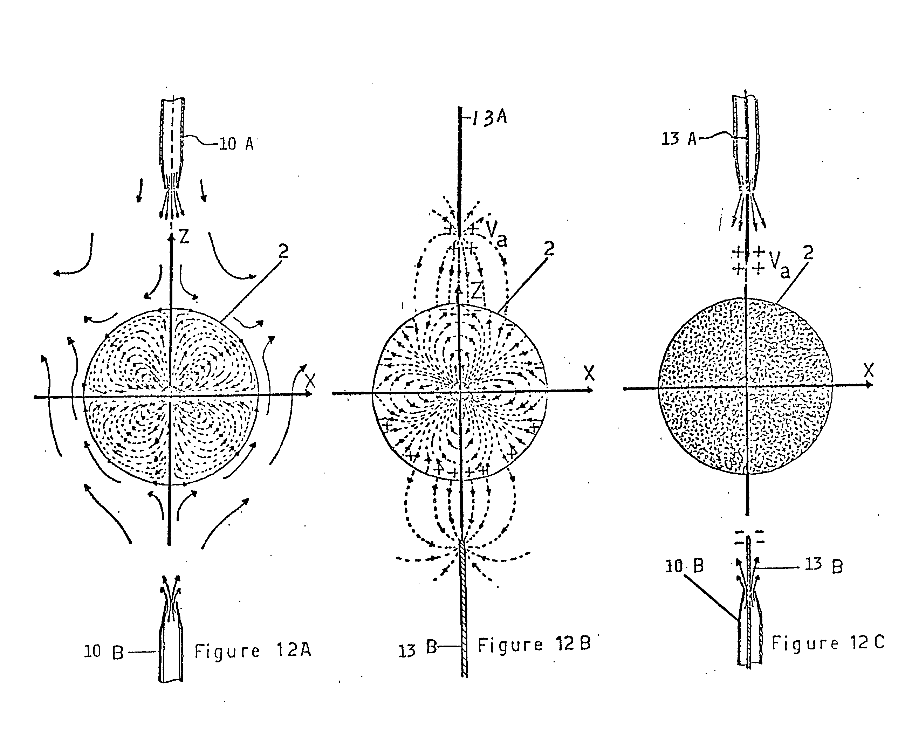

For steady state operation of a plasma ball, diagrammatically illustrated at 2 in Figures 1A, 1B, 10A, and 10B, a thermonuclear fuel is transported towards the center from the ends of a reaction chamber, generally indicated at 4, and reaction products are removed continuously from the center. In the embodiments of Figures 1B and 10B this is achieved by suspending the plasma ball between two gas jets, in the areas 8 and 9, (See also Figure 12A) coming from opposite directions. These jet contain fuel in such amounts that the fuel concentration in the plasma ball is kept at a constant level through diffusion across the interface between the jets and the plasma ball. The jets are produced by two identical nozzles, generally indicated at 10A and 10B, centered on opposite ends of the plasma ball 2. The two nozzles, positioned along the Z axis of the reaction chamber 4, direct their jets toward the plasma sphere 2 and cause on each hemisphere a drag force in opposite directions. When the plasma sphere is displaced upwards, the downward drag force from the upper nozzle increases, but the upward drag force from the lower nozzle decreases; hence there is a net downward drag force which tends to restore the plasma sphere to its equilibrium position. Likewise, a downward displacement of the plasma sphere results in a net upward drag force restoring the sphere to its equilibrium position. The conclusion is that the nozzles 10A and 10B can stabilize motions of the plasma sphere along the polar axis Z. A qualitative picture of the flow pattern inside and around the plasma is shown in Figure 12A.

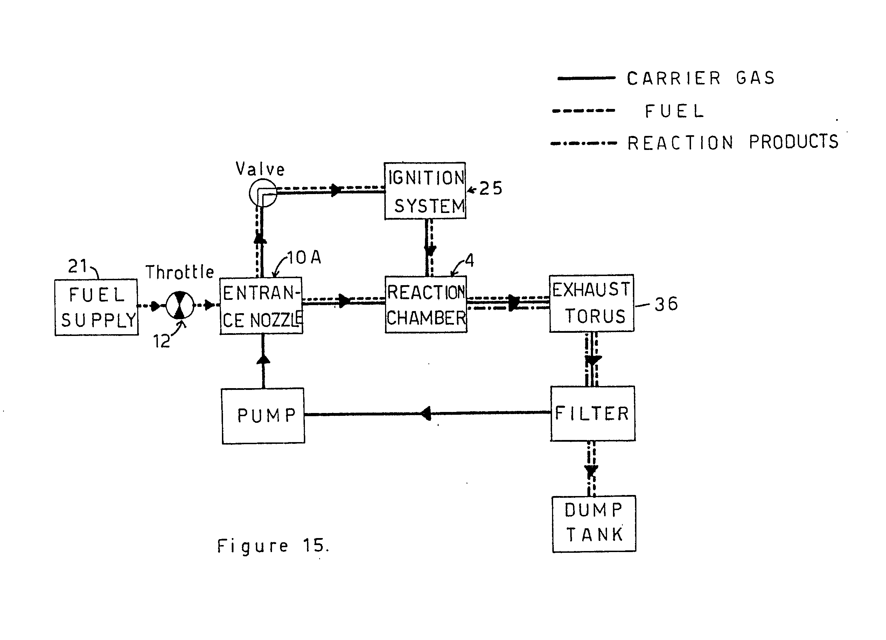

The reaction chamber 4 is transparent to allow radiation emanating from the plasma surface to escape. The flow pattern of the jets inside the reaction chamber is characterized by a stagnation point at either pole of the central plasma ball 2 and by a stagnation ring located at its equator, as indicated in Figure 6. The gas leaves the reaction chamber through an exit port 6 and is collected for recirculation or recovery of the reaction products which, with deuterium or tritium for fuel, are isotopes and may be separated from the carrier gas by liquification. Prior to entering the chamber 4, or in the chamber itself, the fuel is mixed with the carrier gas in the required concentration. The energy output of the central plasma sphere can be regulated by a throttle valve, diagrammatically illustrated at 12 (See also Figure 15) controlling the fuel concentration inside the jets. Alternatively, the fuel and carrier gases may be premixed in the desired ratio before the source is connected to the reaction chamber.

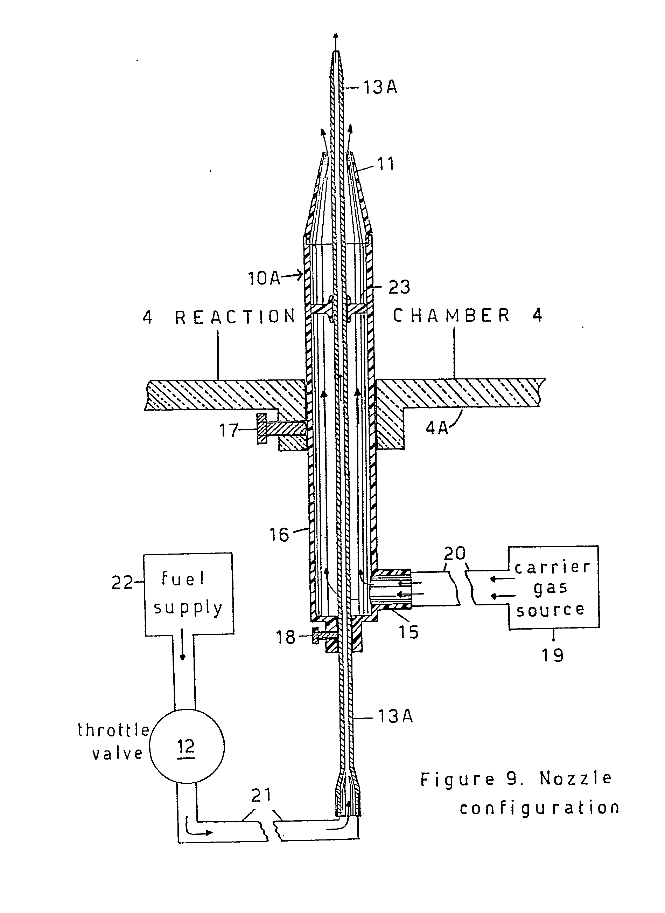

The two nozzles 10A and 10B are of identical construction, as illustrated in Figure 9. Each is designed to (1) produce a jet of carrier gas emanating from its central conical exit section 11, (2) produce a jet of fuel gas emanating from a hollow needle 13A, and (3) allow the fuel needle 13A to be connected to a source of electric potential (not shown). Because of this potential, the outer parts (11, 15 and 16) of the nozzle are made of insulating material, whereas the fuel needle 13A is made of metal. The position of the nozzle as a whole with respect to the reaction chamber 4 can be fixed, after adjustment, by tightening a screw 17. Also, the position of the fuel needle can be secured within the tube 16 of the nozzle by tightening a screw 18. The entrance section 15 of the nozzle is connected with a source 19 of carrier gas by a pipe 20. The entrance of the fuel needle 13A is connected by a pipe 21 to the fuel supply 22. The amount of fuel entering the reaction chamber 4 is controlled with the throttle valve 12. A perforated collar 23 keeps the fuel needle centered on the axis of the nozzle.

When the metal needles 13A and 13B are placed at different potentials, an electric force arises on each hemisphere of the plasma sphere 2, which is directed towards the nearest needle. When the plasma is displaced away from the polar axis Z, both electrical forces become inclined with respect to the polar axis and there arises a net electrical force that tends to restore the plasma sphere to its equilibrium position, irrespective of the direction of its displacement. Hence, it is possible to stabilize motions away from the polar axis by means of the electric force on the plasma sphere arising from placing the metal needles 13A and 13B at a suitable potential difference. An additional effect of this external electrostatic field is that the plasma sphere, because of its charge distribution, orients itself along the polar axis Z of the external field. Electric field lines inside and around the plasma sphere are shown in Figures 11A and 12B. The dominant multipole moment of the charge distribution inside the plasma sphere 2 is a linear octupole: in the upper hemisphere there is a distribution of negative charge throughout the convective region, and of positive charge on the interface between the convective region and the core; in the lower hemisphere, the situation is reversed: the positive charge is distributed throughout the convective part and the negative charge is on the interface. All of these charge distributions are symmetric about the polar axis Z, and together form a linear octupole.

If the plasma sphere were confined only by two jets, as in Figure 12A, the displacements away from the polar axis would be unstable; similarly, confinement by an electric field only, as in Figure 12B, is unstable with respect to displacement along the polar axis Z. When the two forces are combined, however, as in Figure 12C, the plasma sphere can be kept in a stable position without touching the walls of the reaction chamber at any point. The precise position of the sphere can be controlled by changing the strength of either gas jet, or by changing the potential of the needles 13A and 13B. The correct values for these adjustable parameters can be determined beforehand by substituting for the plasma sphere a thin metal sphere with the same dimensions, as such a sphere is equally susceptible to drag forces from the jets and electric forces from the needles.

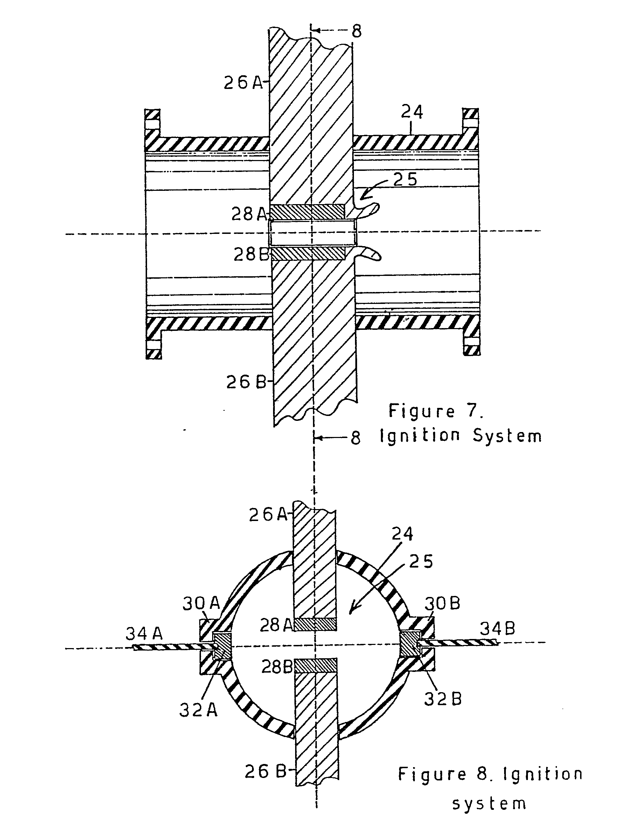

The central plasma ball is created as follows: An electrical power supply is short-circuited by placing the slugs 32A and 32B between the electrodes 28A and 28B (see Figures 7 and 8). The electrical circuit includes a power supply with voltage E, and an inductor with self-inductance L; the total resistance of the circuit is R. The differential equation governing the current is: $L dI/dt + IR = E$, with the solution

$$I = \frac{E}{R}(1 - \exp(\frac{-rt}{L})).$$

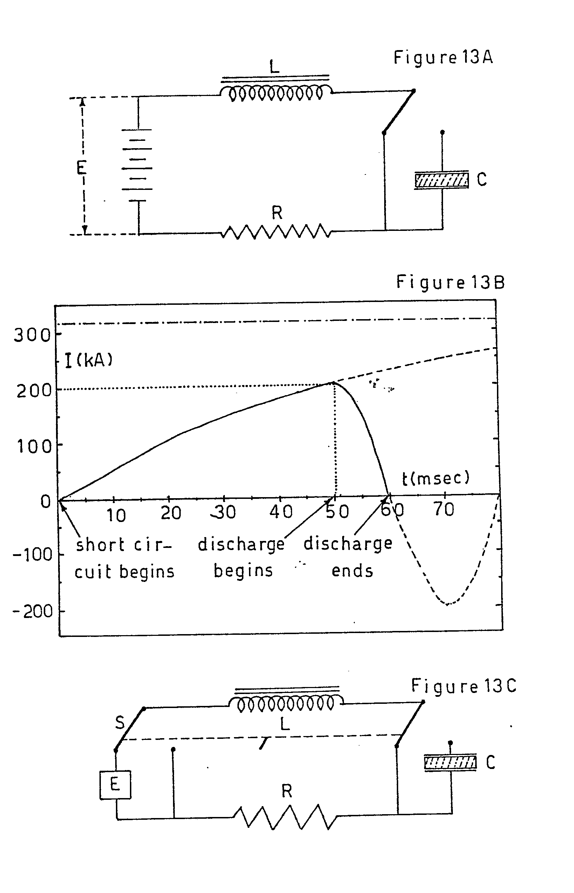

As the short-circuit current rises from zero to its asymptotic value $E/R$, the slugs 32A and 32B are pulled outward simultaneously, leaving a gap between the electrodes 28A and 28B. Since at the moment of interruption, the circuit contains a non-zero magnetic flux $LI$, inductive effects produce an arc discharge across the gap. If the discharge current exceeds a threshold value of about 150 kiloampères, ferromagnetic ordering of turbulent plasma elements is responsible for the discharge to behave as a large effective capacity C. After breaking the circuit and formation of the discharge, the equivalent electrical circuit is a series L, C, R circuit, connected to a voltage E (see Figure 13A). Taking the circuit parameters L, C, R, and E as independent of time, the differential equation for the current is now:

$$L d^2I/dt^2 + RdI/dt + I/c = 0,$$

which has periodic solutions provided $R^2 < 4L/C$. For sufficiently small resistance R, the current oscillates harmonically with period $2\pi\sqrt{LC}$. At maximum and minimum values of the current I, the field energy of the oscillation is stored completely in the magnetic energy $\frac{1}{2}LI^2$ of the inductor. At zero current, the entire field energy is stored in the electrical energy $Q^2/2C$ of the capacitor, where Q is the charge on one of the capacitor blades. Some charge leakage is likely to occur through the discharge; therefore, it would be more realistic to represent the arc in the equivalent electrical circuit as a capacitor parallel with a resistor. Furthermore, the discharge capacity is not constant, but increases with the strength of vortex motion in the plasma. Thirdly, the contribution of transformer iron to the circuit self-inductance L depends on the magnitude of the current I, because of saturation. For these reasons, the following numerical discussion can only give order-of-magnitude estimates for the electrical circuit parameters necessary to form a thermonuclear plasma sphere.

Consider a cylindrical lightning discharge of radius r=0.1 meter and length l=100 meter. At a discharge current of 200 kAmps, the energy $E_m$ of the magnetic field around the discharge may be estimated as

$$\int HBdV = \frac{\mu_0}{2\pi} I^2 l \ln(\frac{l}{r}) \approx 2.4 \times 10^6 \text{ Joule},$$

where $\mu_0 = 4\pi \times 10^{-7}$ N/A$^2$ is the magnetic permeability of the vacuum. The self-inductance of this lightning stroke is given by $L = 2E_m/I^2 \approx 1.2 \times 10^{-4}$ Henry. Next consider an electrical circuit consisting of cylindrical copper bars of radius $r_0$=0.1 meter and length l=10 meter on board of a ship. In the event of an electrical short-circuit, the magnetic field of a sufficiently large short-circuit current will magnetize the iron hull of the ship to saturation. The effect of the iron hull is represented in the equivalent electrical circuit of Figure 13A as the magnetic core of the inductor L. For the sake of calculation, represent the hull of the ship as a cylinder surrounding the copper bars over their full length with massive transformer iron. With length l=10 meter, inner radius $r_0$=0.1 meter and outer radius $r_1$=10 meter, the cylinder volume will be

$$V = \pi(r_1^2 - r_0^2)l \approx 31 \text{ m}^3,$$

and this represents a mass of $2.5 \times 10^6$ kg iron. If all this iron is magnetized to a saturation field of $B_s$=1.5 Tesla, the magnetic energy at current I=200 kAmps is

$$\int HBdV = B_s Il(r_1 - r_0) \approx 2.7 \times 10^6 \text{Joule}.$$

This is comparable in magnitude to the magnetic energy in the lightning discharge calculated above. In the present case, the magnetic energy does not depend quadratically in the current I, but only linearly, because the iron cylinder around the current will be completely saturated. This also means that the self-inductance of the cylinder depends on the magnitude of the current. In submarines, the electrical power supply is a set of batteries capable of producing short-circuit currents of more than 100 kAmps. If such a battery bank with voltage E is short-circuited, the current reaches $11-/e \approx 0.63$ of its asymptotic value $I_m = E/R$ after a characteristic time $\tau = L/R$. Typically, the characteristic time in submarine short-circuits is given as 0.05 sec, which is consistent with $L = 10^{-4}$ Henry and $R = 2 \times 10^{-3}$ Ohm for the relevant circuit parameters. The battery bank must have a voltage $E = I_m R$ 633 Volt for the current to reach 200 kAmps at t=0.05 sec, as in Figure 13B. At this moment, an energy $\frac{1}{2}LI^2 = 2 \times 10^6$ Joule is stored in the magnetic field, and this is 54% of the work done by the battery bank since the circuit was shorted. The remaining 46% has of course been dissipated as Joule heat in the circuit resistance R. The resistance of 10 meter copper bar with radius 5 cm is $1.4 \times 10^{-6}$ Ohm. Clearly the main contribution to the circuit resistance comes from the internal resistance of the battery bank. With internal resistance 0.08 Ohm, an ordinary 12 Volt car battery will have a short-circuit current of 150 Amps. An array of 2000 parallel rows of 50 of such car batteries in series can produce the required maximum short-circuit current of about 300 kAmps at 600 Volt, and such a power supply will just have the internal resistance $R = 2 \times 10^{-3}$ Ohm indicated above. The generation of plasma spheres during switching errors in the engine room of ships was discussed by P. A. Silberg in his article Review of Ball Lightning (in: Problems of Atmospheric Electricity, editor S, Coroniti, Elsevier). As the electrical circuit is broken at t=0.05 sec., the discharge capacity C enters the differential equation for the current. A periodic solution for the current is desired, in which the magnetic field energy of the inductor L turns into electrical energy in the capacitor C with as little dissipative losses as possible. At zero current, the circuit contains no magnetic flux, so that the oscillation can be stopped by blowing the turbulent plasma slab 35 away from the electrodes 28A and 28B by means of the nozzle 10A in Figures 1A and 10A, or the nozzle 10C in Figures 1B and 10B. On leaving the electrode gap, the plasma slab 35 transforms into a self-contained plasma sphere 2, and floats towards its central position in the reaction chamber 4 indicated on Figures 1A, 1B, 10A and 10B. After breaking the circuit at t=0.05 sec., the first zero of the current occurs after $\frac{1}{4}$ of the oscillation period $2\pi\sqrt{LC}$. For the sake of calculation, the first current zero is taken at t=0.06 sec., which gives 0.04 sec. for the oscillation period and, with $L=10^{-4}$ Henry for the circuit self-inductance, an estimate of C=0.4 Farad for the capacity of the discharge. Without discharge, the capacity of the electrodes would be given by

$$C=\varepsilon_0 A/d \simeq 4.4 \times 10^{-12} \text{ Farad,}$$

where $\varepsilon_0=8.8\times10^{-12}$ Farad/meter is the dielectric constant of the vacuum, $A=10^{-2}$ m$^2$ is the electrode surface area, and $d=2\times10^{-2}$ meter is the electrode spacing. To make up the difference, the discharge must have a relative dielectric constant of $0.4/4.4\times10^{-12}\simeq10^{11}$. This high value still falls within the range of values reported for rotating devices: $10^6$ for a low-density plasma capacitor to $10^{15}$ for solids spinning at the break-up velocity. Figure 13B sketches the discharge current during ignition, idealized as above. Instead of a battery bank, the ignition circuit could also be equipped with a capacitive power supply, for instance a capacitor bank or a homopolar generator. The electrical circuit then must include a switch S which disconnects the power supply without interrupting the circuit. The equivalent electrical circuit is now as in Figure 13C, and the ignition procedure is as follows: At t=0, the switch S is connected with the power supply E, and the electrodes 28A and 28B are short-circuited by means of the slugs 32A and 32B. At this stage, the circuit consists of the power supply capacity $C_p$ and the circuit inductance L, so that the discharge current will oscillate with period $2\pi\sqrt{LC_p}$. Since the discharge current starts at zero, it reaches its first maximum after $\frac{1}{4}$ of its oscillation period. At this moment, all energy of the oscillation resides in the magnetic field of the inductor L. This magnetic energy is not allowed to return to the power supply. By means of switch S, the power supply is disconnected from the circuit, and simultaneously the slugs 32A and 32B are removed from the electrodes 28A and 28B. Instead of returning to the power supply, the magnetic energy of the inductor now ends up in the arc discharge as before. The presence of a large inductor in the ignition circuit is the feature essential to the formation of an energetic plasma ball, and not the way in which the inductor acquires magnetic energy.

Ignition apparatus for creating the plasma ball by means of an arc is generally indicated at 25 in Figures 1A, 1B, 7 and 8. A duct 24 of asbestos or other non-combustible material is connected to an opening at the equator of the chamber 4. To create an arc within the duct 24, (Figures 7 and 8) two electrodes 26A and 26B are formed of heavy, opposing, spaced copper bars extending transversely into the duct 24. The ends of these electrodes are provided with contacts, as indicated at 28A and 28B, of silver or other highly conductive metal resistant to oxidation and which can withstand high temperatures. The duct 24 is provided also with two oppositely-disposed outwardly-extending collars 30A and 30B having longitudinal openings into the interior of the duct 24 in alignment with and on opposite sides of the gap between the electrodes. To provide a low resistance path capable of conducting a high current between the electrodes, two generally cubical silver slugs 32A and 32B are slidably positioned in the collars and coupled to insulating arms 34A and 34B by which the slugs can be moved radially inwardly into the gap between the contacts 28A and 28B. The slugs are dimensionsed to fit nicely between the contacts to form a low-resistance connection capable of carrying a high current.

The arms 34A and 34B are connected to a shutter mechanism (not shown) which may be of any design capable of rapidly separating the two slugs from the contacts. Speeds in the order of one to a few milliseconds can be attained with available mechanisms, and such speed is important in generating the fireball.

The high intensity arc that forms between the contact points gives rise to a fireball capable of leaving the area where it is initiated. In this instance, the fireball is caused to move into the chamber 4 by the gas jet which passes through the duct 24 into the chamber 4 and by the magnetic force created by the current through the arc and the electrodes 26A and 26B. As noted above, the plasma ball, after being transported into the chamber 4, is maintained in position, away from the chamber walls, by the force of the two opposing jets from the nozzles 10A and 10B and the electrostatic field.

The characteristics of the glass forming the chamber 4 are the same as those previously used in the construction of the torus commonly used as a chamber for thermonuclear reactions. The chamber 4 is formed of two identical generally conical sections 4A and 4B, the larger ends of which are held in juxtaposition by longitudinal compression by any suitable mechanism that permits exhaust gases to escape from the space between them into an annular collection ring 36 connected to the port 6. In this example, the collection ring is interrupted to provide room for the arc discharge mechanism 25. The third nozzle 10C is used only during the initial creation and positioning of the plasma sphere, whereas in the embodiment of Figure 1A, to be described, the jet used to displace and position the plasma ball continues to function during the fusion process.

In operation, the plasma ball 2 is maintained in the central area of the chamber 4 and the reaction products, along with the excess carrier gas and any unused fuel, are discharged into the ring 36 and outwardly through the port 6 for disposal or recovery of useful gases.

The plasma sphere is maintained in the central area of the chamber by the two opposing nozzles 10A and 10B in combination with the externally created electrostatic field. These gaseous jets are formed of light gases, whose nuclei are capable of reacting to form heavier nuclei, and a carrier gas that takes no part in the reaction. The active gas may, for example, be equal parts of deuterium and tritium. The inactive gas may be nitrogen or some even less reactive gas. The major portion of the mixture is the inert gas carrier and its concentration must be enough so that it forms an effective shield that imprisons high-energy photons in the core of the plasma sphere. The composition of the fuel mixture will be adjusted in accordance with the requirements of the particular system. It may for example consist of 5% deuterium, 5% tritium, and 90% nitrogen. The gaseous jets thus serve the multiple functions of maintaining the plasma ball in position, so that it does not touch the walls of the chamber, providing a continuous supply of reaction fuel, and flushing the reaction products from the chamber.

By regulating the flow of fuel gases into the jet, as by valve 12, it is possible to control the rate of energy generation in the thermonuclear region.

The construction of the chamber and the mode of operation may assume many different forms. To some extent these will depend upon the size and density of the plasma sphere. If the density of the plasma is significantly greater than air, the sphere may be maintained in position by a single operating nozzle. Such a configuration is illustrated by Figures 1A and 10A considered in conjunction with the explanatory Figures 12A, 12B and 12C.

In this example, the sphere is created by the arc structure 25 and blown by means of the nozzle into position in the chamber. The force of the jet from the bottom nozzle 10B and the electric potential connected to the needle 13B serve to maintain the sphere 2 in position.

One method of maintaining the plasma sphere 2 in the desired position is by use of a servo-mechanism that senses the position of the plasma ball, by optical or other type sensors, and adjusts the velocity of the carrier gas entering the chamber through one or both of the nozzles or the strength of the electrostatic field as may be necessary to maintain the position of the plasma sphere.

It is contemplated that under certain operating conditions the means for initial creation of the plasma ball may be omitted from the reactor structure, the plasma ball being generated in a separate apparatus temporarily connected to the fusion reactor, the apparatus being removed once the reactor is placed in operation.

From the foregoing it will be seen that my invention may take a variety of forms in terms of physical construction as well as in the mode of operation thereby adapting it for the economical and practical requirements of each particular application.

**Claims**

1. A method for creating and maintaining a self-supporting plasma ball comprising the steps of

— storing magnetic energy in an inductor (L)
— discharging said energy between a pair of flat electrodes (28A, 28B), the discharge circuit comprising an inductance L, an effective capacity C defined by the electrodes and the discharge there between, and an ohmic resistance below the critical resistance $(4L/C)^{1/2}$,
— so that a reversal of the current occurs during discharge, and,
— removing the plasma ball from the region between the electrodes at or near the moment of zero current.

2. The method according to claim 1 comprising the step of

— mixing nuclei of light fusionable elements with gas surrounding the electrodes prior to discharge, in order to initiate fusion reactions.

3. The method according to claim 1 or 2 comprising the step of

— establishing a flow of gas in a duct (24) around the discharge region between the electrodes (28A, 28B) for carrying the plasma ball in the direction of the gas flow in order to remove it from the region between the electrodes.

4. The method according to one of the claims 1, 2 or 3 comprising the steps of maintaining the ball in a stable position without touching any solid object by

— exerting hydrodynamic stresses on the surface of the plasma ball (2) by means of gas jets with adjustable direction and flow rate, and by
— exerting electric stresses on the surface of the plasma ball (2) by means of an adjustable distribution of electric potential.

5. The method according to claim 4 characterized in that the position of the plasma ball is stabilized by

— two gas jets with adjustable flow rate directed at the center of the plasma ball (2) from opposite directions, and by applying
— a generally dipolar potential distribution collinear with the axis of the gas jets and with adjustable electric field strength.

6. The method according to claim 5 comprising the steps of

— regulating the concentration of light fusionable elements relative to nonreacting elements in gas flowing around the plasma ball
— filtering reaction products of the fusion process from the gas flowing around the plasma ball.

7. Apparatus for carrying out the method as claimed in claim 1 with an electrical circuit comprising

— a current source for charging an inductance, switching means (S; 26A, 28A, 32A, 34A, 26B, 28B, 32B, 34B) for discharging the inductance through a capacitance formed by a pair of electrodes (28A, 28B) with generally flat contact surfaces and the discharge there between and conductor means (32A, 32B) connecting the circuit elements and having an ohmic resistance below the critical resistance, so that a reversal of the current occurs during discharge, and
— nozzle means (10A, 10C) for directing a gas jet at the discharge plasma at the moment of zero current.

8. Apparatus for carrying out the method of claim 3 comprising

— a duct (24) of asbestos or other non-combustible material around the contact surfaces of the electrodes (28A, 28B)
— a nozzle (10A, 10C) communicating with the duct (24)
— a source of gas (19) connected with the nozzle (10A, 10C)
— a throttle controlling the rate of gas flow through the duct (24).

9. Apparatus for maintaining the plasma configuration of claims 1, 2, 4, 5 or 6 in a stable position comprising

— a chamber (4) of glass suitable for thermonuclear conditions communicating with the duct (24)
— nozzle (10A, 10B) and exhaust (36, 6) means connected with the chamber (4).
— a source of gas (19) connected with the nozzle means (10A, 10B)
— throttle means controlling the rate of gas flow from the gas source (19) to the nozzles (10A, 10B)
— electrode means (13A, 13B) attached to the chamber (4)
— a variable source of potential connected to the electrodes (13A, 13B) controlling the electric field in the chamber (4)

10. Apparatus stabilizing the position of a plasma ball as in claims 4 or 5 characterized by

— a chamber (4) which is generally symmetrical about a center line

— two nozzles (10A, 10B) located on and directed along the center line of the chamber
— two electrodes (13A, 13B) located on the center line of the chamber (4) on opposite sides of the plasma configuration.

11. Apparatus for carrying out the method of claims 2 and 3 comprising

— a duct (24) as in claim 8
— a source of gas containing light fusionable elements
— a nozzle (10A, 10B) connected to the duct (24)
— a throttle (12) controlling the rate of gas flow from the fuel source to the nozzle.

12. Apparatus for carrying out the method of claim 6 comprising

— a reaction chamber (4) as in claim 9
— nozzle (10A, 10B) and exhaust (36, 6) means connected to the reaction chamber (4)
— a source of carrier gas (19) containing nuclei of elements too heavy for fusion reactions
— a source of fuel gas (22) containing nuclei of light fusionable elements
— throttle means (12) controlling the rate of gas flow from the sources (19, 22) to the nozzles (10A, 10B)
— filtering means removing the reaction products from the gas flowing around a fusioning plasma ball.

**Patentansprüche**

1. Verfahren zur Herstellung und Erhaltung eines selbsttragenden Plasmaballs, das folgende Schritte umfaßt:

— Speichern von magnetischer Energie (11);
— Entladen dieser Energie zwischen einem Paar Flachelektroden (28a, 28b), wobei der Entladekreis eine Induktivität L, eine effektive Kapazität C, die durch die Elektroden und die Entladung zwischen diesen festgelegt ist, und einen Widerstand unter dem kritischen Widerstand $(4L/C)^{1/2}$ aufweist, so daß eine Umkehr des Stromes während des Entladens stattfindet, und
— Zurückziehen des Plasmaballs von gem Gebiet zwischen den Elektroden zu oder nahe dem Moment des Nullstroms.

2. Verfahren nach Anspruch 1, das folgenden Schritt aufweist:

— Mischen von Kernen von lichtfusionierbaren Elementen mit Gas, das die Elektroden umgibt vor dem Entladen, um die Fusionsreaktion zu starten.

3. Verfahren nach Anspruch 1 oder 2, das folgenden Schritt aufweist:

— Einbringen eines Gasstroms in eine Durchführung (24), um die Entladezone zwischen den Elektroden (28a, 28b) um den Plasmaball in Richtung des Gasstroms zu bewegen, um ihn von dem Gebiet zwischen den Elektroden wegzubewegen.

4. Verfahren nach einem der Ansprüche 1, 2 oder 3, wobei es folgende Schritte zum Fixieren der Kugel in einer stabilen Lage, ohne daß sie einen festen Gegenstand berührt, aufweist:

— Ausüben von hydrodynamischen Beanspruchungen auf die Oberfläche der Plasmakugel (2) durch Gasstrahlen mit einstellbarer Richtung und Volumenstrom und
— Ausüben von elektrischen Beanspruchungen auf die Oberfläche der Plasmakugel (2) durch eine einstellbare Verteilung des elektrischen Potentials.

5. Verfahren nach Anspruch 4 gekennzeichnet dadurch, daß die Lage der Plasmakugel stabilisiert wird durch:

— zwei Gasströme mit einstellbarem Volumenstrom, die zum Zentrum der Plasmakugel (2) von entgegengesetzten Richtungen gerichtet ist, und durch Anwendung einer generell dipolaren Potentialverteilung, die mit der Achse des Gasstroms kollinear verläuft und eine einstellbare elektrische Feldstärke aufweist.

6. Verfahren nach Anspruch 5, das folgende Schritte aufweist:

— Regulieren der Konzentration der lichtfusionierbaren Elemente im Verhältnis zu nichtreagierenden Elemente im Gas, welches um die Plasmakugel strömt;
— Herausfiltern der Reaktionsprodukte des Fusionsprozesses aus dem Gas, das um die Plasmakugel strömt.

7. Vorrichtung zur Ausführung des Verfahrens, wie es in Anspruch 1 beansprucht wird, mit einem elektrischen Kreis, der folgendes umfaßt:

— eine Stromquelle zum Speisen einer Spule, Schalter (26a, 28a, 32a, 34a, 26b, 28b, 32b, 34b) zum Entladen der Spule durch eine Kapazität, welche durch ein Elektrodenpaar (28a, 28b) mit generell flachen Kontaktoberflächen und der Entladung zwischen diesen gebildet wird, und Leitungen (32a, 32b), welche die Elemente des Stromkreises verbinden und einen Ohmschen Widerstand unter dem kritischen Widerstand aufweisen, so daß eine Umkehrung des Stroms während der Entladung auftritt, und
— Gasdüsen (10a, 10c), um einen Gasstrom auf das Entladungsplasma im Moment des Nullstroms zu richten.

8. Vorrichtung zur Ausführung des Verfahrens nach Anspruch 3, welche aufweist:

— eine Durchführung (24) von Asbest oder anderem nichtbrennbarem Material um die Kontaktoberflächen der Elektroden (28a, 28b);
— eine Gasdüse (10a, 10c), die mit der Durchführung (24) verbunden ist;
— eine Gasquelle (19), die mit der Gasdüse (10a, 10c) verbunden ist;
— eine Drossel, die von Volumenstrom des Gasstroms durch die Durchführung (24) regelt.

9. Vorrichtung zum Fixieren der Plasmakonfiguration nach Anspruch 1, 2, 4, 5 oder 6 in einer stabilen Lage, die folgendes umfaßt:

— eine Glaskammer (4), geeignet für thermonukleare Bedingungen, die mit der Durchführung (24) verbunden ist;
— eine Gasdüse (10a, 10b) und Absaugungen (36, 6), die mit der Kammer (4) verbunden sind;
— eine Gasquelle (19), die mit den Gasdüsen (10a, 10b) verbunden ist;
— Drosselelemente, die den Volumenstrom des Gasstroms und der Gasquelle (19) zu den Gasdüsen (10a, 10b) regeln;
— Elektroden (13a, 13b), die der Kammer (4) zugeordnet sind;
— eine veränderbare Potentialquelle, die mit den Elektroden (13a, 13b) verbunden ist, um das elektrische Feld in der Kammer (4) einzuregeln.

10. Vorrichtung zum Stabilisieren der Position der Plasmakugel nach den Ansprüchen 4 oder 5 gekennzeichnet durch:

— eine Kammer (4), die im allgemeinen symmetrisch zur Mittellinie ist;
— zwei Gasdüsen (10a, 10b), die an der Mittellinie der Kammer angeordnet und entlang dieser gerichtet werden;
— zwei Elektroden (13a, 13b), die auf der Mittellinie der Kammer (4) auf den entgegengesetzten Seiten der Plasmakonfiguration plaziert sind.

11. Vorrichtung zur Durchführung des Verfahrens nach Anspruch 2 oder 3, welcher folgendes umfaßt:

— eine Durchführung (24) entsprechend zu Anspruch 8;
— eine Gasquelle, die lichtfusionierbare Elemente enthält;
— eine Gasdüse (10a, 10b), die mit der Durchführung (24) verbunden ist;
— eine Drossel (12), die die Durchflussrate des Gasstroms von der Brennstoffquelle zur Gasdüse regelt.

**Revendications**

1. Procédé pour la production et la stabilisation d'un plasma en boule qui comprend les démarches suivantes:

— stockage d'énergie magnétique dans un inducteur (L);

— Déchargement de cette énergie entre une paire d'électrodes plattes (28a, 28b), le circuit du déchargement qui comprend une inductance L, une capacité effective C définées par les électrodes et le déchargement entre elles et, qui montre une résistance en-dessous de la résistance critique $(4L/C)^{1/2}$ ainsi qu'un retournement du courant a lieu pendant le déchargement et
— écartement du plasma en boule de la région entre les électrodes au ou près du moment du zéro courant.

2. Procédé qui comprend selon la revendication 1 la démarche suivante:

— Mélangement des noyaux d'éléments fusionnable à l'aide de lumière avec gaz qui entoure les électrodes avant le déchargement pour mettre en marche la réaction de fusion.

3. Procédé selon revendication 1 ou 2 qui comprend la démarche suivante:

— installation d'un courant de gaz dans une jonction (24) autour de la région du déchargement entre les électrodes (28a, 28b) pour transporter le plasma en boule dans la direction du courant de gaz pour l'éloigner de la région entre les électrodes.

4. Procédé selon une des revendications 1, 2 ou 3 qui comprend les démarches de maintenir la boule dans une position stable sans qu'elle touche un objet solide:

— excercer des efforts hydrodynamics sur la surface du plasma en boule (2) à l'aide de jets de gaz avec direction et volume de courant ajustible;
— excercer des efforts électriques sur la surface du plasma en boule à l'aide d'une distribution ajustable du potentiel électrique.

5. Procédé selon revendication 4 caractérisé par le fait que la position du plasma en boule est stabilisée par:

— deux courants de gas avec volume de courant ajustable qui sont dirigés vers le centre du plasma en boule (2) de deux directions opposées et par application d'une distribution du potentiel généralement dipolaire qui est colinéar avec l'axe du courant de gaz et qui a un champs de force électrique ajustable.

6. Procédé selon revendication 5 qui montre les démarches suivantes:

— régulation de la concentration des éléments qui sont à fusionner avec de la lumière en relation avec des éléments qui ne réagissent pas dans le gaz qui entoure le plasma en gaz;
— filtrer les produits de réaction du procédé de la fusion du gaz qui entoure le plasma en boule.

7. Dispositif pour la réalisation du procédé comme demandé dans la revendication 1 avec un circuit électrique qui comprend les éléments suivants:

— une source de courant pour le chargement d'une bobine inductrice, couplage (26a, 28a, 32a, 34a, 26b, 28b, 32b, 34b) pour le déchargement de la bobine par une capacité formée par une paire d'électrodes (28a, 28b) avec des surfaces de contact généralement plattes et le déchargement entre elles et des lignes (32a, 32b) qui joignent les éléments du circuit et qui ont une résistance ohmic en-dessous et la résistance critique ainsi qu'un retournement du courant a lieu pendant le déchargement et
— des jets de gaz (10a, 10c) pour diriger un courant de gaz sur le plasma de déchargement au moment où le courant est zéro.

8. Dispositif pour la réalisation du procédé selon revendication 3 qui montre:

— une jonction (24) d'asbeste ou d'un autre matériel combustible autour des surfaces de contact des électrodes (28a, 28b);
— un jet de gaz (19) qui est joint à la jonction (24);
— une source de gaz (19) qui est joint au jet de gaz;
— un étrangleur qui règle le courant du gaz par la jonction (24).

9. Dispositif pour fixer la configuration du plasma selon les revendications 1, 2, 4, 5 ou 6 dans une position stable qui comprend:

— une chambre de verre (4) apte à des conditions thermo-nucléaires qui est joint à la jonction (24);
— un jet des gaz (10a, 10b) et des exhaustions (36.6) qui sont joints à la chambre;
— une source de gaz (19) qui est jointe aux jets de gaz (10a, 10b);
— éléments d'étranglement qui règlent le volume du courant de gaz et de la source de gaz (19) vers les jets de gaz (10a, 10b);
— électrodes (13a, 13b) attachées à la chambre;
— une source variable de potentiel qui est jointe aux électrodes (13a, 13b) pour contróler le champs électrique dans la chambre (4).

10. Dispositif qui stabilise la position du plasma en boule selon les revendications 4 ou 5 caractérisé par:

— une chambre (4) qui est généralement symétrique envers la ligne médiane;
— deux jets de gaz (10a, 10b) arrangés sur et dirigés le long de la ligne médiane le la chambre (4);
— deux électrodes (13a, 13b) arrangés sur la ligne médiane de la chambre (4) sur les côtés opposés de la configuration du plasma.

11. Dispositif pour la réalisation du procédé selon revendication 2 ou 3 qui comprend le suivant:

— une réalisation (25) selon revendication 8;
— une source de gaz qui comprend des éléments à fusionner à l'aide de lumière;
— un jet de gaz (10a, 10b) qui est joint à la jonction (24);
— un étrangleur (12) qui contrôle la quantité du courant de gaz de la source du combustible au jet de gaz.

12. Réalisation du procédé selon revendication 6 qui comprend le suivant:

— une chambre de réaction (4) selon revendication 9;
— un jet des gaz (10a, 10b) et dispositif d'exhaustion (36, 6) qui est jointe à la chambre de réaction (4);
— une source de gaz porteur (19) qui contient des noyaux d'éléments qui sont trop lourds pour des réactions de fusion;
— une source de gaz combustible (22) qui contient des noyeaux d'éléments fusionnable à l'aide de lumière;
— des étrangleurs (19) qui contrôlent la quantité du courant de gaz des sources (19, 22) aux jets de gaz (10a, 10b);
— dispositif de filtre pour écarter les produits de réaction du courant de gaz d'un plasma en boule qui fusionne de gaz autour d'un plasma en boule qui fusionne.

12. Vorrichtung zur Durchführung des Verfahrens nach Anspruch 6, die folgendes umfaßt:

— eine Reaktionskammer (4) entsprechend Anspruch 9;
— eine Gasdüse (10a, 10b) und Absaugvorrichtung (36, 6), die mit der Reaktionskammer (4) verbunden sind;
— eine Quelle von Trägergas (19), die Elementkerne enthält, welche zu schwer für die Fusionsreaktion sind;
— eine Quelle von Brennstoffgas (22), die Kerne von lichtfusionierbaren Elementen enthalten;
— Drosselemente (12), die die Durchflußrate des Gasstroms von den Quellen (19, 22) zu den Gasdüsen (10a, 10b) regeln;
— Filtervorrichtungen zum Zurückhalten der Reaktionsprodukte von der Gasströmung um eine fusionierende Plasmakugel.

Figure 1A.

Figure 1 B.

Figure 2.

Polar Axis

Fig. 3

Polar Axis

Fig. 4

4

**0 019 668**

Figure 5. Electromagnetic fieldlines

Figure 6. Streamlines

Figure 7.
Ignition System

Figure 8. Ignition
system

Figure 9. Nozzle configuration

Figure 10 A.

Figure 10 B. Reaction Chamber.

Figure 11A. Electric fieldlines

Figure 11B. Streamlines and charges

Figure 12A          Figure 12B          Figure 12C

Figure 13A

Figure 13B

Figure 13C

Fig. 14

Vorticity (Eq'n(3))

Convective heat flux (Eq'n(2))

Figure 14A

Current density and vector potential

Magnetic field (Eq'n(8))

Figure 14B

CARRIER GAS
FUEL
REACTION PRODUCTS

Figure 15.

EXHAUST TORUS — 36

IGNITION SYSTEM — 25

REACTION CHAMBER — 4

FILTER

DUMP TANK

Valve

10 A

ENTRAN-CE NOZZLE

PUMP

Throttle

12

21 FUEL SUPPLY